Europäisches Patentamt

European Patent Office

Office européen des brevets

(11) Publication number: **0 186 291**
**A1**

## (12) EUROPEAN PATENT APPLICATION

(21) Application number: **85308184.2**

(22) Date of filing: **11.11.85**

(51) Int. Cl.⁴: **A 62 D 3/00**
**B 01 D 3/12**

(30) Priority: **12.11.84 GB 8428527**

(43) Date of publication of application:
.02.07.86 Bulletin 86/27

(84) Designated Contracting States:
AT BE CH DE FR IT LI NL SE

(71) Applicant: **THE MICANITE & INSULATORS COMPANY
LIMITED**
**Westinghouse Road Trafford Park**
**Manchester, M17 1PR(GB)**

(72) Inventor: **Worthington, Hugh Malcolm**
**6 Woodpecker Drive**
**Northwich Cheshire(GB)**

(72) Inventor: **Livesey, Christopher William**
**8 Erica Drive**
**Burnage Manchester(GB)**

(74) Representative: **Kirby, Harold Victor Albert**
**Central Patent Department Wembley Office The General**
**Electric Company, p.l.c. Hirst Research Centre East Lane**
**Wembley Middlesex HA9 7PP(GB)**

(54) Decontamination of insulating fluids.

(57) Contaminated insulating liquid from a transformer or similar electrical apparatus is passed through a degasifier (1), to a thin-film evaporator (2) where trichlorobenzenes (T.C.B.'s) are removed and thence to a molecular still (3) where polychlorobyphenyls (P.C.B.'s) are distilled off and condensed in a cold trap (8). The apparatus is typically 2.5m high, and is thus transportable to the site of a contaminated transformer or the like.

./...

Croydon Printing Company Ltd.

EP 0 186 291 A1

Fig.1.

-1-

Decontamination of Insulating Fluids

The present invention relates to the decontamination of fluid-insulated electrical apparatus such as transformers and switchgear.

In the past, such equipment was often insulated with a liquid comprising a mixture of polychlorobiphenyls (P.C.B.'s) and chlorobenzenes, generally called askarel. Typically, the polychlorobiphenyl mixture had a chlorine content of about 54% by weight, corresponding to an average of approximately five chlorine atoms per molecule. The mixture contained various polychlorobiphenyls with between three and seven chlorine atoms per molecule. It was subsequently realised that polychlorobiphenyls were accumulating in the environment, and it was also found that they can decompose to form highly toxic dioxins and dibenzofurans when strongly heated. Because of the environmental problems, and the potential toxic hazard associated with the use of P.C.B-insulated transformers in environments where there was a significant fire-risk, the use of P.C.B.'s as insulating fluids has ceased in the U.K., the U.S.A. and most European countries. Existing P.C.B.-filled transformers have usually been drained and filled with alternative insulating fluids such as silicone oils and various esters such as the MIDEL fluids (MIDEL is a Registered Trade Mark) made by the applicants and forming the subject of their U.K. Patent No. 1,602,092.

Unfortunately in many cases the P.C.B. insulating fluids were not flushed out thoroughly before refilling, and/or absorbed P.C.B.'s were gradually leached out from the transformer windings, with the result that many supposedly decontaminated transformers are in fact still contaminated with appreciable quantities of P.C.B.'s in their insulating fluids, and are classified as such. Thus under some current U.S. Regulations transformers filled with insulating fluids containing more than 500 p.p.m. (parts per million) of P.C.B.'s are classified as "P.C.B.-filled", those with 50 to 500 p.p.m. P.C.B.'s are classified as "P.C.B.-contaminated" and only those with less than 50 p.p.m. P.C.B.'s are classified as "P.C.B.-free". Safety legislation relating to P.C.B.-contaminated electrical apparatus is growing increasingly strict and the reduction of P.C.B. levels to the required limits is becoming an increasingly urgent and difficult problem.

Methods have been proposed for removing traces of P.C.B.'s from transformer fluids, but none of these methods, so far as the applicants are aware, has met with commercial success. Thus attempts have been made to absorb the P.C.B.'s on activated carbon or neoprene. This adsorption process is very slow however, and the use of activated carbon involves a risk of contaminating the fluid with a conducting material. Attempts have been made to chemically remove the chlorine from the P.C.B.'s (and thereby render them harmless) by means of dispersed sodium. This process cannot readily be carried out on site however, and has not, so far as the applicants are aware, been applied commercially. Attempts have been made to selectively absorb the P.C.B.'s using pressurised liquid carbon dioxide as a solvent. The high pressures required make this process expensive, and it cannot readily be carried out on site. Finally, microorganisms are known which are capable of digesting P.C.B.'s. However processes based on such microorganisms are too expensive to be useful for the removal of P.C.B.'s on a large scale.

A problem which has beset most, if not all, known processes for the removal of P.C.B.'s has arisen from the widespread use of trichlorobenzen es (T.C.B.'s) as a constituent of the askarels and as a flushing solvent when non-toxic insulating fluids were substituted for P.C.B. insulating fluids in transformers. Inevitably a small proportion of the T.C.B. solvent has remained in the insulating fluid (typically 2 to 3%) and since most known processes for removing P.C.B.'s cannot distinguish between P.C.B.'s and T.C.B.'s, these processes must first remove perhaps 2 or 3% of T.C.B.'s before they can remove perhaps a few hundred or a few thousand p.p.m. of P.C.B.'s.

An object of the present invention is to provide a process for the removal of P.C.B.'s which is rapid and efficient and which can be carried out on site.

According to one aspect of the present invention, in a process for the removal of polychlorobiphenyl (P.C.B.) contaminants from essentially non-volatile insulating fluid the contaminated insulating fluid is subjected to a molecular distillation process so as to distil off the polychlorobiphenyl contaminants.

By a molecular distillation process is meant a vacuum distillation process in which the liquid is evaporated under a low pressure from an evaporating surface and condensed on a condensing surface which is spaced from the evaporating surface by a distance which is smaller than or comparable to the mean free path of the molecules in the vapour at the pressure employed. Said distance is usually between 5 and 50mm and said low pressure is typically between $10^{-3}$ and $10^{-4}$ Torr.

The molecular distillation technique is known per se and is used in the chemical industry for the distillation of pharmaceutical compounds and other high value products, for the distillation of heat-sensitive mixtures, and for the distillation of small quantities of highly involatile oils and greases for use in vacuum apparatus. Thus the molecular distillation technique has hitherto been used mainly in low volume, high added value applications. We have found a valuable and totally different application for this technique, namely the removal of polychloro- byiphenyls from large quantities of non-volatile insulating liquids. We have found that a surprisingly rapid and efficient separation can be achieved, with compact apparatus which can easily be transported to the site of electrical apparatus containing the P.C.B. - contaminated insulating liquid.

In a preferred method in accordance with the invention, the evaporator of the molecular still is heated to a temperature of between 165 and 175$^{o}$C. The preferred pressure, as measured over a cold trap, is between $10^{-3}$ and $10^{-4}$ Torr. Preferably the evaporator surface of the molecular distillation apparatus is wiped during the process. Preferably the contaminated insulating fluid is initially fed through a low pressure evaporator to remove components such as trichlorobenzenes which are more volatile than polychorobiphenyls and which would otherwise inhibit their removal by molecular distillation. The low- pressure evaporator is preferably a thin-film evaporator.

The invention includes within its scope electrical apparatus containing an insulating liquid from which polychlorobiphenyls have been completely or partially removed by a method in accordance with the invention.

According to another aspect of the invention, apparatus for the removal of polychlorobiphenyls from insulating liquid comprises a degasifier, an evaporator for removing components of the liquid which are highly volatile, said evaporator being connected to the outlet of the degasifier, and a molecular still connected to the outlet of the evaporator. Preferably the molecular still has a continuously wiped evaporator surface. Preferably the evaporator feeding the molecular still is a thin film evaporator.

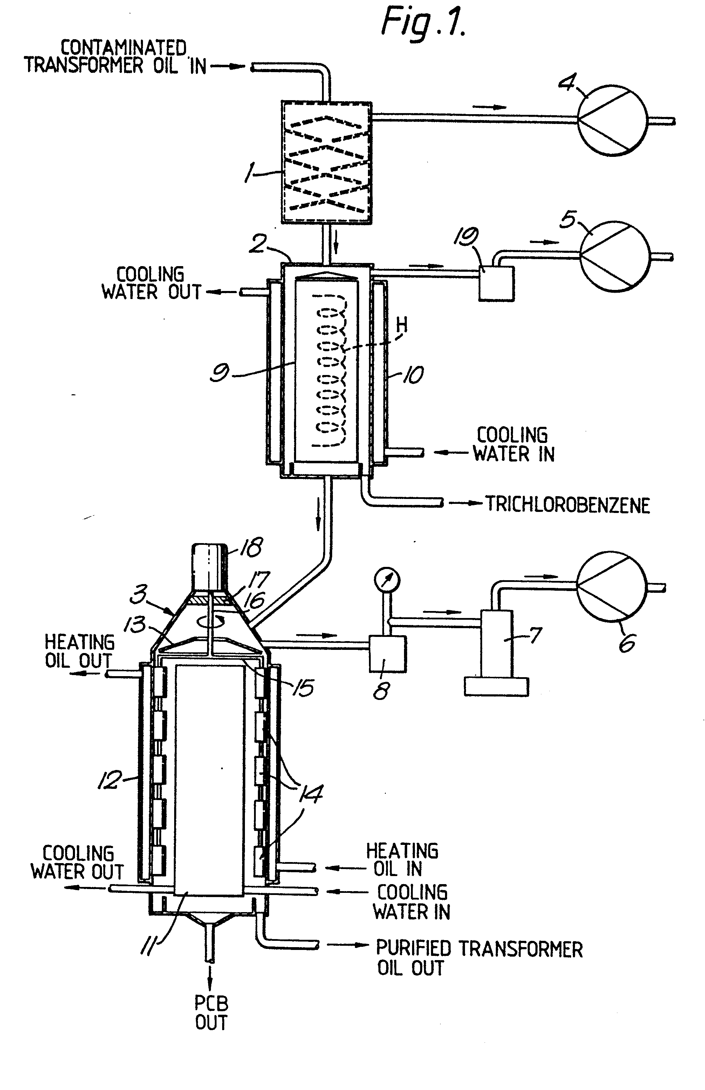

One embodiment of the invention will now be described by way of example with reference to the accompanying drawing, Figure 1.

Figure 1 is a diagrammatic elevation, partially in section, of apparatus for removing polychlorobiphenyls from non-volatile transformer oil.

In this example, it is assumed that the transformer oil is MIDEL fluid (MIDEL is a Registered Trade Mark) as supplied by The Micanite and Insulators Company Limited, which has been contaminated in use with approximately 10,000 p.p.m. polychlorobiphenyls and approximately 3% trichlorobenzenes, both these proportions being by weight. The pure MIDEL fluid has a vapour pressure of $10^{-7}$ Torr at $20^{\circ}$C.

The apparatus shown comprises a degasifier 1, the outlet of which is connected to a thin film evaporator 2. The outlet of evaporator 2 is in turn connected to a molecular still 3, which is suitably model KD30 of the range supplied by Leybold-Heraeus G.M.B.H., of Hanau, W. Germany. The wiper system of this still is the subject of W. German Patent No. 1901348. Degasifier 1 (which may be of conventional form) is exhausted by a rotary vacuum pump 4 and thin film evaporator 2 is exhausted to a pressure of approximately 1 Torr by a similar rotary vacuum pump 5 through a cold trap 19. Molecular still 3 is exhausted via a vacuum line comprising a rotary vacuum pump 6, a diffusion pump 7 and an intermediate cold trap 8. The pressure above cold trap 8 is maintained at between $10^{-3}$ and $10^{-4}$ Torr.

Evaporator 2 is provided with an electrical heating element H to maintain the evaporating surface 9 at approximately 120-140$^{\circ}$C. The condensing surface is cooled by a water jacket 10. Molecular still 3 is provided with a tubular water-cooled condenser 11 and an exterior heated oil jacket 12, the oil in the jacket being maintained at a temperature of 165 to 175°C.

In use, contaminated transformer oil is fed continuously, and at a controlled rate, into degasifier 1. Dissolved air (and other gases, if present) are exhausted through pump 4. The degasified contaminated oil then flows as a thin film over the heated surface 9 in evaporator 2. The temperature and pressure in evaporator 2 are such that substantially all of the trichlorobenzenes (and any other contaiminants of similar volatility) are removed from the oil at this stage, thus ensuring the optimum conditions for removal of P.C.B.'s subsequently.

It is more economic to remove T.C.B. contaminants in a simple evaporator than in a molecular still.

The T.C.B.-free oil from evaporator 2 is fed via a distributor 13 so as to form a thin film on the cylindrical heated outer wall of molecular still 3. This wall constitutes an evaporator surface of approximately $0.3m^2$. The surface of the thin oil film is continuously wiped by P.T.F.E. rollers 14, which are suspended from a cage 15. Cage 15 is continuously rotated by a drive shaft 16, which runs through a vacuum seal 17 and is driven by a motor 18 at a speed of approximately 120 r.p.m; sufficient to hold the rollers 14 against the oil film by centrifugal force, so that they continuously renew its surface by a rolling action.

Consequently the P.C.B. contaminants are rapidly evaporated to the tubular condenser 11 (which is spaced a few millimeters from the inner surface of the heated outer wall). Small quantities of P.C.B.'s which are not condensed are removed by a cold trap 8. The purified MIDEL fluid is connected at the outlet to the still, the typical P.C.B. content being less than 500 p.p.m. by weight after only a single pass through the apparatus. The contents of a typical transformer (800 Litres) may be purified in this manner in approximately 24 to 36 hours. The P.C.B. content can be further reduced to less than 50 p.p.m. by a second pass of the purified fluid through the apparatus of Figure 1. Alternatively the feed rate may be initially reduced by about 50%, to achieve the same result in a single pass. The apparatus shown may be accommodated in a height of approximately 2.5m and is therefore quite easily transportable.

It is envisaged that similar results may be obtained when decontaminating other non-volatile insulating liquids, such as silicone fluids, by appropriately adjusting the temperature of the heating oil in the molecular still. In general the temperature chosen will represent a balance between reasonable rate of removal of P.C.B.'s and reasonable loss by evaporation of the insulating fluid (typically 5% will be acceptable), and may be determined by routine experimentation. It is envisaged that the process will be applicable to most insulating fluids having a vapour pressure which is different from that of the P.C.B.'s at the molecular distillation temperature employed. Where the vapour pressure of the oil is higher than that of P.C.B. the purified liquid would be collected as distillate from the molecular still.

## CLAIMS

1. A method of removing polychlorobiphenyl contaminants from essentially non-volatile insulating fluid wherein the contaminated insulating fluid is subjected to a molecular distillation process so as to distil off the polychlorobiphenyl contaminants.

2. A method according to Claim 1 wherein said fluid is formed into a heated liquid film which film is wiped during said molecular distillation process.

3. A method according to Claim 2 wherein said film is wiped by rolling action.

4. A method according to any preceding Claim wherein the contaminated insulating fluid is initially fed through a low pressure evaporator to remove components which are more volatile than the polychlorobiphenyl contaminants.

5. A method according to Claim 4 wherein said low pressure evaporator is a thin film evaporator.

6. A method according to Claim 4 or Claim 5 wherein the pressure, as measured over a cold trap, in said low pressure evaporator is below 10 Torr.

7. A method according to any preceding Claim wherein the molecular distillation process is carried out at a pressure, as measured over a cold trap, of between $10^{-3}$ and $10^{-4}$ Torr.

8. A method according to any preceding Claim wherein said fluid comprises an organic ester.

9. A method according to any preceding Claim wherein the contaminated insulating fluid is passed continuously through molecular distillation apparatus at a controlled rate.

10. Electrical apparatus containing insulating fluid decontaminated by a method in accordance with any preceding Claim.

11. Apparatus arranged to remove polyphlorobiphenyls from an insulating liquid, said apparatus comprising a degasifier, an evaporator for removing components of the liquid which are highly volatile, said evaporator being connected to the outlet of the degasifier, and a molecular still connected to the outlet of the evaporator.

12. A method of removing polychlorobiphenyl contaminants from volatile insulating fluid wherein the contaminated insulating fluid is subjected to a molecular distillation process so as to distill it off from the polychlorobiphenyl contaminants.

Fig.1.

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| A | CHEMISTRY AND INDUSTRY, no. 9, 2nd May 1983, pages 342-345, London, GB; K.J. ERDWEG: "Molecular and short-path distillation" * Whole article * | 1-3,7, 8,12 | A 62 D 3/00 B 01 D 3/12 |
| A | GB-A-1 485 577 (REKTORAT SLOVENSKEJ VYSOKEJ SKOLY TECHNIKEJ) * Page 2, lines 19-75; claims * | 1-9,11 ,12 | |
| A | US-A-4 333 822 (A. TKAC et al.) * Column 2, line 28 - column 3, line 39; column 3, line 64 - column 4, line 57; claims * | 1-9,11 ,12 | |
| A | GB-A- 415 088 (BRITISH DRUG HOUSES) * Page 3, line 130 - page 4, line 49; claims * ---        -/- | 1-9,11 ,12 | TECHNICAL FIELDS SEARCHED (Int. Cl.4)  A 62 D B 01 D |

The present search report has been drawn up for all claims

| Place of search | Date of completion of the search | Examiner |
|---|---|---|
| THE HAGUE | 18-03-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

European Patent Office

**EUROPEAN SEARCH REPORT**

0186291
Application number

EP 85 30 8184

| DOCUMENTS CONSIDERED TO BE RELEVANT | | | Page 2 |
|---|---|---|---|
| Category | Citation of document with indication, where appropriate, of relevant passages | Relevant to claim | CLASSIFICATION OF THE APPLICATION (Int Cl 4) |
| A | CHEMICAL ABSTRACTS, vol. 98, no. 20, 16th May 1983, page 159, abstract no. 163530k, Columbus, Ohio, US; J.R. LONGANBACH et al.: "Development of a process for PCB removal from triarylphosphate hydraulic fluids by vacuum distillation" & ENVIRON. SCI. TECHNOL. 1983, 17(5), 305-7 * Abstract * | 1,4,6, 8,12 | |
| | ----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 18-03-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82